# EUROPÄISCHE PATENTSCHRIFT

(11) **EP 0 866 841 B1**
(45) Veröffentlichungstag und Bekanntmachung des Hinweises auf die Patenterteilung: **18.04.2001**
(21) Anmeldenummer: 96943891.0
(22) Anmeldetag: 06.12.1996
(51) Int. Cl.: C09K 7/02, C09K 7/06, E21B 43/25, E21B 43/26

(54) **NEUE WÄSSRIG-QUELLFÄHIGE ZUBEREITUNGEN VON GUAR UND GUARDERIVATEN IN OLEOPHILEN FLÜSSIGKEITEN UND IHRE VERWENDUNG**
NEW AQUEOUS SWELLABLE COMPOSITIONS OF GUAR GUM AND GUAR GUM DERIVATIVES IN OLEOPHILIC LIQUIDS AND THEIR USE
NOUVELLES COMPOSITIONS GONFLANTES EN MILIEU AQUEUX DE GOMME DE GUAR ET DE DERIVES DE GUAR DANS DES LIQUIDES OLEOPHILES ET LEUR UTILISATION

(30) Priorität: 15.12.1995 DE 19546911
(43) Veröffentlichungstag der Anmeldung: 30.09.1998
(73) Patentinhaber: Cognis Deutschland GmbH, 40589 Düsseldorf (DE)
(72) Erfinder: MÜLLER, Heinz, D-40789 Monheim (DE); HEROLD, Claus-Peter, D-40822 Mettmann (DE); VAN TAPAVICZA, Stephan, D-40699 Erkrath (DE)
(86) Internationale Anmeldenummer: EP9605456
(87) Internationale Veröffentlichungsnummer: WO9722676

(56) Entgegenhaltungen:
- EP-A- 0 391 251
- EP-A- 0 398 112
- EP-A- 0 398 113
- EP-A- 0 399 270
- EP-A- 0 505 201
- EP-A- 0 627 481
- WO-A-91/19771
- US-A- 4 960 527

## Beschreibung

Im Bereich naturstoffbasierter polymerer Kohlenhydratverbindungen kommt Guar und seinen Derivaten, wie Hydroxyalkyl-Guar und/oder Carboxyalkyl-Guar, in zahlreichen technischen Einsatzgebieten herausragende Bedeutung zu. Die üblicherweise als mehr oder weniger feinteilige Pulver zum Einsatz kommenden Quellmittel auf Guar-Basis zeichnen sich durch ihre außerordentlich wirkungsvolle Verdickung bei der Auflösung in wäßrigen Phasen aus. Dabei bestehen zuverlässige Möglichkeiten zur Regelung der Viskosität entsprechend eingedickter wäßriger Behandlungslösungen sowohl beim Einsatz ausgewählter Produkte auf Basis Guar oder seinen Derivaten als insbesondere auch unter Mitverwendung geeigneter Vernetzungsmittel, die über nichtionische, anionische und/oder kationische Mechanismen die zusätzliche Viskositätssteuerung in der wäßrigen Phase ermöglichen. Zu den hier angeschnittenen Sachfragen existiert umfangreicher druckschriftlicher Stand der Technik, aus dem lediglich beispielhaft zitiert sei: Davidson, Handbook of Water-Soluble Gums and Resins, Kapitel 6, Mc Graw-Hill, London (1980).

Die hier betroffene Wertstoffklasse natürlichen Ursprungs kennzeichnet sich bekanntlich durch Kohlenhydrat-Polymerverbindungen, die wenigstens weitaus überwiegend aus Mannose- und Galaktose-Einheiten aufgebaut ist. Zur Derivatisierung eignet sich insbesondere die primäre Hydroxylgruppe in C₆-Stellung, aber auch sekundäre Hydroxylgruppen des Polymergerüstes können derivatisiert werden. Über eventuelle Reinigungsstufen des Naturstoff-basierten Grundmaterials und/oder durch Derivatisierung im angesprochenen Sinne, sowie gegebenenfalls durch Mitverwendung von Vernetzungsmitteln, lassen sich die rheologischen und sonstigen Eigenschaften der letztlich geforderten wäßrig basierten Behandlungsflüssigkeiten sehr präzise steuern.

Für das großtechnische Arbeiten kann eine Schwierigkeiten in der Frühphase der Interaktion zwischen dem Trockenpulver auf Guar-Basis und der wäßrigen Phase gegeben sein. Durch eine zu rasche Interaktion zwischen dem Trockenpulver und der insbesondere bei niederen Temperaturen gehaltenen wäßrigen Phase bilden sich gelförmig verklumpende Feststoffpartikelchen aus, deren Gelhülle die weitere Penetration der wäßrigen Phase in das Innere des Klumpens und damit die gleichmäßige Auflösung und Dispergierung des Feststoffmaterials in der wäßrigen Phase substantiell behindert. Schwierigkeiten dieser Art können insbesondere dann auftreten, wenn im großtechnischen Einsatz beträchtliche Mengen solcher verdickten wäßrigen Behandlungsflüssigkeiten in situ herzustellen und unmittelbar dem Einsatzort zuzuführen sind. Ein typisches Beispiel hierfür ist die Verwendung Guar-verdickter Behandlungslösungen im Rahmen der on-shore- und/oder off-shore-Erschließung von natürlichen Wertstoffen wie Erdöl, Erdgas, Wasser und dergleichen. Bei der Behandlung von Bohrlöchern - beispielsweise beim Reinigen, bei der zwischenzeitlichen Stimulierung und dergleichen - werden häufig wäßrige Polymersysteme eingesetzt. Benötigt werden hier insbesondere Polymere, die zur Einstellung hoher und vorbestimmter Viskositäten geeignet sind. Guar und Guarderivate beziehungsweise deren Abmischungen mit weiteren Hilfsmitteln, insbesondere Vernetzungsmitteln, haben hier eine herausragende Bedeutung. Die zuvor zitierte Literaturstelle schildert beispielsweise im Unterkapitel 6-10 die Anwendung entsprechend verdickter wäßriger Frac-Fluids zur Wiederherstellung beziehungsweise Erhöhung der Produktionskapazität entsprechender Bohrungen. Das Frac-Fluid-System erfaßt dabei in der Regel die Mitverwendung der sogenannten Proppants - in den weitaus überwiegenden Fällen Sand - wobei es Aufgabe der nach unten in das Bohrloch gepumpten Frac-Flüssigkeiten ist, einerseits in die Wertstoffführenden Umgebungsbereiche der Bohrung einzudringen, zum anderen die mitgeführten Proppants zur weiteren Wirkungsverstärkung in die geöffneten neuen Kanäle einzutragen.

Auch zu dem hier dargestellten speziellen Einsatzgebiet wasserlöslicher Polymerverbindungen im Oilfield-Bereich findet sich umfangreiches druckschriftliches Material. Verwiesen sei hier auf die folgenden Druckschriften: Society of Petroleum Engineers (SPE) of AIME - SPE 9288, 1980 "APPLICATIONS OF WATER-SOLUBLE POLYMERS IN THE OILFIELD"; SPE 25205 (1993) "Crosslinked Borate HPG Equilibria and Rheological Characterization"; SPE 26559 (1993) "Fluid Selection for Fracturing High-Permeability Formations" sowie SPE 25490 (1993) "An Improved Method for Measuring Fracturing Gel Break With Resin-Coated Proppant". Zu näheren Einzelheiten der hier betroffenen technischen Problematik wird auf die Angaben des hier ausgewiesenen umfangreichen Schrifttums verwiesen.

Für den hier zuletzt dargestellten Anwendungszweck von Guar beziehungsweise Guarderivaten als Verdicker und Viskositätsbildner in wäßrigen Behandlungsflüssigkeiten für die Behandlung von Erdreich-Bohrungen ist eine Angebotsform der Pulver auf Basis Guar beziehungsweise Guarderivate erarbeitet worden, die sich den verschiedenartigen Anforderungen dieses großtechnischen Einsatzgebietes besonders anpaßt. Die Guar-basierten trockenen Pulver werden - etwa mengengleich - mit wasserunlöslichen flüssigen Kohlenwasserstoffverbindungen zu einer feststoffreichen aber fließ- beziehungsweise pumpfähigen Dispersion aufbereitet. Als organische Flüssigphase werden hier bisher Dieselöle oder vergleichbar dünnflüssige wenigstens weitgehend aromatenfreie Kohlenwasserstoffölfraktionen verwendet.

Verwiesen wird hierzu auf die EP 0 505201 A1, die Dispersionen eines Gelbildners, wie Guar oder Guarderivaten in Dieselöl offenbart, wobei zusätzlich ein Ether, wie Ethylenglykol-Monobuthylether der Dispersion als Hilfsmittel zugesetzt wird. Die Stabilität dieser Dispersionen konnte durch die erfindungsgemäße Lehre verbessert werden.

Quellung der feinteiligen Wertstoffe auf Guar-Basis tritt mit einer gewissen Zeitverzögerung auf. Sichergestellt ist damit einerseits die gleichmäßige Einmischung des feinteilig quellenden Feststoffes in die gesamte wäßrige Phase. Auch das Auftreten unerwünscht rascher oberflächlicher Anquellung und damit der Behinderung des durchgängigen Quellens sind beseitigt.

Die erfindungsgemäße Lehre geht von der hier zuletzt geschilderten Angebotsform von Guar und Guarderivaten für die Herstellung wäßriger Behandlungslösungen mit steuerbarer Viskosität aus. Die erfindungsgemäße Lehre hat sich dabei die Aufgabe gestellt, Verbesserungen dieses Prinzips in mehrfacher Hinsicht zu erreichen. Flüssige Kohlenwasserstoffverbindungen der hier bisher eingesetzten Art stellen insbesondere beim Arbeiten im off-shore-Bereich potentielle Verschmutzer dar, die sich durch nur begrenzte Abbaubarkeit auszeichnen. Völlig unabhängig davon bedarf es aber auch einer Verbesserung technischer Effekte: Die hier angesprochenen bekannten hochkonzentrierten Abmischungen von pulverförmigem Guar beziehungsweise entsprechenden Guarderivaten und flüssigen reinen Kohlenwasserstoffverbindungen zeigen nur eine sehr beschränkte Dispersionsstabilität. Die Guarfeststoffe setzen sich bei mehrstündiger Lagerung ohne Bewegung des Mehrstoffgutes am Boden des Vorratsbehälters unter gleichzeitiger Phasentrennung in eine überwiegende Feststoffphase und die aufstehende Flüssigphase ab. Daraus entstehende Fehler in der Dosierung vorbestimmter Mengen der Feststoffphase in die wäßrige Behandlungsflüssigkeit gefährden den Gesamtprozeß. Die bis heute eingesetzten Guardispersionen verlangen dementsprechend die Mitverwendung von Stabilisatoren und/oder Verdickern in der oleophilen Flüssigphase.

Die im nachfolgenden geschilderte erfindungsgemäße Lehre geht von der Erkenntnis aus, daß durch den Ersatz des wenigstens überwiegenden Anteiles der organischen Flüssigphase auf Kohlenwasserstoffbasis durch ausgewählte und mit polaren Gruppen derivatisierte Kohlenwasserstofföle substantielle Verbesserungen und Vereinfachungen in mehrfacher Hinsicht erreicht werden können.

### Gegenstand der Erfindung

Gegenstand der Erfindung ist dementsprechend in einer ersten Ausführungsform die Verwendung öllöslicher und im Temperaturbereich von 0 bis 10°C fließfähiger oleophiler organischer Flüssigphasen aus den Klassen entsprechender Mono- und/oder Polycarbonsäureester, Kohlensäureester, Ether, Fettalkohole und deren Oligoalkoxide, sowie ihren Abmischungen miteinander als wenigstens überwiegender Anteil der Flüssigphase in lagerstabil homogenen Abmischungen mit Guar und/oder wasserlöslichen Guarderivaten, die als bevorzugt feinteilige Feststoffphase vorliegen. Die zuvor aufgezählten erfindungsgemäß eingesetzten oleophilen organischen Flüssigphasen sind zusätzlich gekennzeichnet durch Flammpunkte von wenigstens 80°C und Viskositätswerte (Brookfield RVT-Viskosität bestimmt bei 10°C) von höchstens 100 bis 150 mPas. Die mehrphasigen Wertstoff-Abmischungen der geschilderten Art eignen sich für den Einsatz in wasserbasierten Bohrlochbehandlungsmitteln und führen dabei - aufgrund ihres Gehaltes an Guar und/oder wasserlöslichen Guarderivaten - zu einstellbaren Viskositätswerten in der wäßrigen Flüssigphase.

Gegenstand der Erfindung sind in einer weiteren Ausführungsform die mehrphasigen Wertstoffgemische aus den zuvor definierten oleophilen organischen Flüssigphasen und den darin eingearbeiteten festen und feinteiligen Wertstoffen auf Basis Guar und/oder Guarderivaten.

### Einzelheiten zur erfindungsgemäßen Lehre

Die erfindungsgemäße Lehre baut auf der bisher nicht beschriebenen Erkenntnis auf, daß oleophile Flüssigphasen auf Basis von Mono- und/oder Polycarbonsäureestern, Kohlensäureestern, Fettalkoholen und deren Derivaten sowie Ethern - und insbesondere auf Basis von ausgewählten Abmischungen der hier angegebenen Stoffklassen - die eingangs geschilderte Zielvorstellung des hier betroffenen technischen Handelns nach dem Stand der Technik besser erfüllen als die bisher benutzten organischen Flüssigphasen auf Basis reiner Kohlenwasserstoffverbindungen. Die erfindungsgemäß ausgewählten organischen Flüssigphasen kennzeichnen sich einerseits durch hinreichend große Molekülbestandteile mit Kohlenwasserstoff-Struktur. Hierdurch wird das Element der oleophilen organischen Flüssigkeitsphase sichergestellt. Gegenüber den reinen Kohlenwasserstoffverbindungen des Standes der Technik unterscheiden sie sich jedoch durch ihre Gehalte an funktionellen Gruppen erhöhter Polarität, insbesondere Estergruppen, Ethergruppen und/oder Hydroxylgruppen. Derart funktionalisierte Kohlenwasserstofföle zeichnen sich nicht nur durch eine substantiell bessere Umweltverträglichkeit und damit insbesondere durch eine verbesserte Abbaubarkeit auf dem Wege natürlicher Abbauprozesse aus, es wurde gleichzeitig gefunden, daß die konzentrierten Abmischungen der erfindungsgemäß ausgewählten Ölphasen mit den trockenen feinteiligen Wertstoffen auf Basis Guar beziehungsweise Guarderivate stark erhöhte Stabilität gegen unerwünschte Entmischungsvorgänge aufweisen. Dabei lassen sich durch gezielte Abmischungen ausgewählter Komponenten der Ölphase Optimierungen der hier beschriebenen Flüssig-Fest-Konzentrate in unterschiedlichster Weise ausbilden beziehungsweise einstellen. Dabei dürften den jeweiligen funktionellen Gruppen am Kohlenwasserstoffmolekül der Flüssigphase vielgestaltige Funktionalitäten zukommen. So ist offenbar die Interaktion zwischen der Oberfläche des Guar-basierten Feststoffteilchens und der erfindungsgemäß derivatisierten Ölphase stärker als beim Einsatz von reinen Kohlenwasserstoffölen. Das Ergebnis ist die erhöhte Entmischungsstabilität des hochkonzentrierten Wertstoffgemisches. Aber auch im praktischen Einsatz können Wirkungsverbesserungen - zusätzlich und unabhängig von dem Element der erhöhten ökologischen Verträglichkeit - ausgenutzt werden.

Bevor auf die bestimmte Beschaffenheit der zuvor aufgezählten einzelnen Stoffklassen für die oleophile Flüssigphase im Sinne der erfindungsgemäßen Definition eingegangen wird, seien bevorzugte Stoffparameter für diese Flüssigphasen herausgestellt, die allgemeine Gültigkeit haben. Erfindungsgemäß ist es dementsprechend bevorzugt oleophile Flüssigphasen mit Flammpunkten von wenigstens 100°C und insbesondere von wenigstens 130°C zu verwenden. Deutlich höherliegende Werte von beispielsweise wenigstens 150 bis 180°C können besonders bevorzugt sein. Gleichzeitig sind entsprechend allgemein gültige bevorzugte Angaben für das Viskositätsverhalten der oleophilen Flüssigphasen zu berücksichtigen. Bevorzugte Flüssigphasen im erfindungsgemäßen Sinne zeigen Viskositätswerte - jeweils bestimmt bei 10°C - von höchstens etwa 50 mPas, wobei Werten von höchstens und insbesondere unterhalb 30 mPas besondere Bedeutung zukommen kann. Gerade für das Gebiet des Einsatzes dieser Guarkonzentrate in wasserbasierten Bohrlochbehandlungsmitteln ist die hinreichende Fließfähigkeit der ölbasierten Wertstoffkombination auch im niederen Temperaturbereich eine wünschenswerte Voraussetzung. Hier wird ja beispielsweise im Rahmen von off-shore-Bohrungen als wäßrige Phase für den in den Bohrprozeß eingeschobenen Arbeitsschritt der Bohrlochbehandlung Seewasser mit seinen niedrigen Temperaturen als wäßrige Phase verwendet.

Die erfindungsgemäß aufgebauten Abmischungen von oleophiler Flüssigphase und feinteiligem Wertstoff auf Guar-Basis können in gleicher Weise in hochkonzentrierter Form ausgebildet sein, wie die bisher benutzten Abmischungen mit Ölen auf Basis reiner Kohlenwasserstoffverbindungen. So sind bevorzugte Abmischungsverhältnisse von oleophiler Flüssigphase : feinstteiliger Feststoffphase Mischungsverhältnisse (jeweils Gewichtsanteile) im Bereich von 65 : 35 bis 40 : 60 und insbesondere im Bereich von 55 : 45 bis 45 : 55. Besonders geeignet können hier entsprechende Abmischungen sein, die etwa gleiche Gewichtsanteile an Guar beziehungsweise Guarderivat einerseits und der auch bei niederen Temperaturen hinreichend fließfähigen oleophilen Flüssigphase aufweisen. Abmischungen dieser Art zeichnen sich - wie im nachfolgenden Beispielsteil gezeigt - durch hohe Stabilitäten gegen unerwünschte Entmischungsvorgänge aus.

Allgemeine Gültigkeit zur Auswahl besonders geeigneter Ölphasen im erfindungsgemäßen Sinne kommt dabei den jeweiligen Stock- beziehungsweise Erweichungspunkten der oleophilen Öle beziehungsweise Ölmischphasen zu. Bevorzugt sind entsprechende Komponenten, die als solche oder in Abmischung miteinander Stockpunkte gleich/kleiner -5°C und vorzugsweise gleich/kleiner -10°C bis -15°C aufweisen.

Die erfindungsgemäß jetzt im Zusammenhang mit den Viskositätsbildnern auf Guar-Basis eingesetzten oleophilen Flüssigphasen lehnen sich damit an einen druckschriftlichen Stand der Technik an, der das Gebiet der ölbasierten Bohrspülungen betrifft und dort insbesondere die Verwendung entsprechender fließfähiger Öle als kontinuierliche Ölphase in W/O-Invert-Bohrspülschlämmen beschreibt. Aus dem hier zwischenzeitlich vorliegenden umfangreichen druckschriftlichen Stand der Technik sei insbesondere verwiesen auf die Offenbarung der auf die Anmelderin zurückgehenden Druckschriften gemäß EP 0 386 638 (C₁₋₅-Monocarbonsäureester); EP 0 386 636 (C₆₋ ₁₁-Monocarbonsäureester); EP 0 374 672 (gesättigte C₁₂₋₁₆-Monocarbonsäureester); EP 0 374 671 (olefinisch 1 - und/oder mehrfach ungesättigte C₁₆₋₂₄-Monocarbonsäureester); EP 0 382 071 (Methylester von C₆₋₂₄-Monocarbonsäuren; EP 0 391 251 (wasserunlösliche Ether einwertiger Alkohole natürlichen und/oder synthetischen Ursprungs mit wenigstens 4 C-Atomen in den Alkoholresten); EP 0 391 252 (wenigstens weitgehend wasserunlösliche und im Temperaturbereich von 0 bis 5°C fließ- und pumpfähige ein- und/oder mehrfunktionelle Alkohole natürlichen und/oder synthetischen Ursprungs); EP 0 532 570 (oleophile Diester der Kohlensäure mit gleichen oder verschiedenen öllöslichen monofunktionellen und gegebenenfalls mehrfunktionellen Alkoholen); W0 91/19771 (oleophile Polycarbonsäureester). Zur Offenbarung dieser Literaturstellen zu charakteristischen Vertretern der erfindungsgemäß definierten oleophilen Flüssigphase gelten insbesondere die folgenden weiterführenden Angaben:
Dem Begriff der erfindungsgemäß einzusetzenden Ether ordnen sich entsprechende oleophile Acetale unter, wie sie beispielsweise beschrieben sind in der EP 0 512 501. Die Alkohole, die Carbonsäuren beziehungsweise daraus gebildeten Ester, die Ether einschließlich der Acetale, und weitere Komponenten der hier genannten geeigneten Stoffklassen können dabei jeweils wenigstens anteilsweise natürlichen und/oder synthetischen Ursprungs sein. Lediglich beispielhaft sei in diesem Zusammenhang verwiesen auf die Offenbarung der WO 95/15364, in der Ester auf Basis von Monocarbonsäuren und monofunktionellen Alkoholen aus der Oxo-Synthese beschrieben sind.
Der umfangreiche hier aufgezählte druckschriftliche Stand der Technik zur Beschaffenheit geeigneter oleophiler Flüssigphasen ist auch für die jetzt erfindungsgemäß aufgezeigte Problemstellung und ihre technische Lösung in seinen Sachaussagen verbindlich. Insoweit wird zu den unterschiedlichen erfindungsgemäß definierten Stoffklassen geeigneter oleophiler Flüssigphasen - jetzt aber für deren Abmischung mit Guar beziehungsweise Guarderivaten - auf diese Angaben des druckschriftlichen Standes der Technik verwiesen. Diese Angaben werden hiermit ausdrücklich in die erfindungsgemäße Offenbarung einbezogen.
Besonders geeignete Ölphasen im Sinne der erfindungsgemäßen Lehre sind auch bei niederen Temperaturen flüssige Ester von Monocarbonsäuren, wobei hier entsprechenden Estern von Monocarbonsäuren mit wenigstens 6 - 8 C-Atomen und vorzugsweise mit wenigstens 10 bis 12 C-Atomen besondere Bedeutung zukommen kann. Geeignete Alkohole sind dabei sowohl einwertige als gegebenenfalls auch niedere mehrwertige Alkohole, zum Beispiel 2-funktionelle oder 3-funktionelle Alkohole, wie es im einzelnen in den zitierten Druckschriften angegeben ist.
Besondere Bedeutung kann in diesem Zusammenhang einerseits Estern von gesättigten Monocarbonsäuren mit 6 bis 16 C-Atomen und/oder Estern von 1- und/oder mehrfach olefinisch ungesättigten Monocarbonsäuren mit 16 bis 30 C-Atomen zukommen. Dabei sind hier entsprechende Ester mit monofunktionellen Alkoholen - bevorzugt mit bis zu 12 C-Atomen - eine besonders bevorzugte Stoffklasse. Untersuchungen der Anmelderin haben gezeigt, daß Esterölen und insbesondere den hier definierten Esterölen eine besonders ausgeprägte Stabilisierungswirkung in den hochkonzentrierten Guarabmischungen zukommt. Offensichtlich ist die Interaktion zwischen der Estergruppierung einerseits und der stark hydrophil ausgebildeten Außenfläche des Guar-basierten Feststoffpartikels besonders intensiv.
Esteröle der hier betroffenen Art können durch Abmischung mit weiteren Komponenten der angezogenen Stoffklassen in vorausbestimmmbarer Weise weiter entwickelt und verbessert werden. Grundsätzlich gilt dieses Prinzip für alle individuell durch die erfindungsgemäße Definition betroffenen Stoffe beziehungsweise Stoffklassen. Für die Optimierung von oleophilen Flüssigphasen im erfindungsgemäßen Sinne haben sich besonders Stoffabmischungen von Estern und Wie zuvor ausgeführt sind geeignete oleophile Flüssigphasen im Sinne der erfindungsgemäßen Lehre - beziehungsweise Mischkomponenten für diese Flüssigphase - aber auch oleophile Alkohole, insbesondere gemäß EP 0 391 252. Diese oleophilen Komponenten können als solche und/oder in Form ihrer wenigstens weitgehend wasserunlöslichen Oligo-Alkoxidverbindungen eingesetzt werden. Die bevorzugt im Temperaturbereich von 0 bis 5°C fließ- und pumpfähigen 1- und/oder mehrfunktionellen Alkohole können natürlichen und/oder synthetischen Ursprungs sein. Geeignet sind dabei insbesondere mono- und/oder difunktionelle Alkohole oleophiler Beschaffenheit und/oder entsprechende Partialether von mehrwertigen, insbesondere difunktionellen Alkoholen, die vorzugsweise von aromatischen Molekülbestandteilen frei sind und sich insbesondere von geraden und/oder verzweigten Kohlenwasserstoffketten ableiten, die auch olefinisch ungesättigt sein können. Monofunktionelle Alkohole mit wenigstens 6 bis 8 C-Atomen, die gewünschtenfalls wenigstens anteilsweise auch olefinisch ungesättigt sind und bis zu 36 C-Atome aufweisen können, sind charakteristische Vertreter.

Zu den weiteren Komponenten der erfindungsgemäß definierten Guar-basierten Mehrstoffgemische gelten die bekannten Angaben des Standes der Technik. So wird zur Beschaffenheit des Feststoffes auf Guar-Basis auf die eingangs zitierte Literaturstelle Davidson, Kapitel 6, verwiesen. Geeignete Guar-Derivate sind insbesondere entsprechende Verbindungen, die durch Veretherung oder Veresterung von Hydroxylguppen am Guarmolekül gebildet worden sind. Kommerziell wichtige Ethern als interessant erwiesen. Bevorzugt sind dabei Ölmischphasen, die die Esteröle als überwiegenden Bestandteil und die Etheröle als untergeordneten Bestandteil enthalten. So kann es zweckmäßig sein, daß wenigstens 2/3 der Ölphase durch ein Esteröl gebildet wird. Mischungsverhältnisse von Ester : Ether im Bereich 3 : 1 bis 5 : 1 und insbesondere im Bereich von etwa 4 : 1 haben sich beispielsweise als sehr wirkungsvoll und in mehrfacher Hinsicht optimiert erwiesen.

Auch gerade in diesem Zusammenhang besonders geeignete Monocarbonsäure-Esteröle sind in den zuvor bereits zitierten Druckschriften zu EP 0 386 636, EP O 374 672 und EP 0 374 671 beschrieben. Besonders geeignete Ether sind Gegenstand der Offenbarung der EP 0 391 251. Zum Zwecke der Vervollständigung der Erfindungsoffenbarung seien hier kurz zusammengefaßt einige Bestimmungselemente dieser besonders geeigneten Ether aufgeführt:
Geeignet sind insbesondere wasserunlösliche und Flammpunkte oberhalb 80°C aufweisende Ether einwertiger Alkohole natürlichen und/oder synthetischen Ursprungs mit wenigstens 4 C-Atomen, vorzugsweise wenigstens 6 C-Atomen in den Alkoholresten. Die Ether sollen im Temperaturbereich von 0 bis 5°C fließ- und pumpfähig sein und in diesem Temperaturbereich insbesondere eine Brookfield RVT-Viskosität unterhalb 50 mPas und insbesondere von höchstens etwa 30 mPas aufweisen. Als Etherphase sind entsprechende Ether bestimmt ausgewählter, insbesondere monofunktioneller Alkohole ebenso geeignet wie Mischether und/oder Ethergemische solcher insbesondere monofunktionellen Alkohole mit bis zu 24 C-Atome, die auch wenigstens anteilsweise olefinisch ungesättigt sein können. Ether, Mischether und/oder Ethergemische von Alkoholen mit 8 bis 18 C-Atomen, die geradkettig und/oder verzweigt sein können sind besonders geeignete Komponenten.
Derivate sind insbesondere hydroxyalkylierte Verbindungen wie Hydroxyethyl-und/oder Hydroxypropyl-Guar, Carboxy-methylierte Derviate, die beispielsweise durch Umsetzung des Einsatzmaterials mit Monochloressigsäure erhalten werden. In an sich bekannter Weise kann beispielsweise durch Hydroxyalkylierung Einfluß auf die Interaktion zwischen hydratisierten Mineralien und dem Guar-Derivat genommen werden. Auch die Elektrolytverträglichkeit wird durch eine solche Hydroxyalkylierung des Guar deutlich verbessert. Entsprechendes gilt für die Löslichkeit und die Klarheit der wäßrigen Guarlösungen.
Zur Mitverwendung von vernetzenden Reaktanten - den "Crosslinkers" - kann ebenfalls auf den einschlägigen und eingangs zitierten druckschriftlichen Stand der Technik verwiesen werden. Die erfindungsgemäß ausgewählten oleophilen Flüssigphasen bedingen insoweit keine grundsätzlichen Abweichungen von dem einschlägigen Stand des technischen Wissens. Insbesondere ist diese Aussage gültig für alle die erfindungsgemäß definierten flüssigen Öle, die polare jedoch nicht reaktive Gruppen in das Kohlenwasserstoffmolekül eingebaut enthalten, beispielsweise also insbesondere für die entsprechenden Ester und Ether.
Eine gegebenenfalls interessante und zusammen mit den erfindungsgemäß definierten oleophilen Ölphasen einzusetzende flüssige Ölkomponente ist mit den sogenannten linearen alpha-Olefinen (LAO) und/oder den entsprechenden Poly-alpha-Olefinen (PAO) gegeben. Die erfindungsgemäße Lehre schließt die Mitverwendung solcher Komponenten ein. Bevorzugte Vertreter dieser Stoffklassen liegen mit ihren physikalischen Stoffparametern im Bereich der zuvor genannten Werte erfindungsgemäß geeigneter Ölphasen. Zur einschlägigen Literatur wird beispielsweise verwiesen auf EP 0 627 481.
Die nachfolgenden Beispiele zeigen zunächst Stabilitätsuntersuchungen an hochkonzentrierten Guarzubereitungen in den erfindungsgemäß definierten Ölphasen. In nachfolgenden Vergleichsversuchen werden dann wasserbasierte Bohrlochbehandlungsmittel unter Einsatz der erfindungsgemäß definierten Stoffgemische hergestellt und in ihrem Lösungs- beziehungsweise Viskositätsverhalten mit einer konventionellen vergleichbaren Wertstoffmischung auf Basis eines reinen Kohlenwasserstofföles in Abmischung mit Guar verglichen.

### Beispiele

Soweit in den nachfolgenden Beispielen die jeweils eingesetzten oleophilen Flüssigphasen nicht durch ihre chemische Kennzeichnung, sondern durch eine andere Bezeichnung bestimmt sind, gelten hier - zur Identifizierung der jeweiligen Flüssigphase - die folgenden Angaben:
Handelsprodukt "PETROFREE" der Anmelderin: Estergemisch aus im wesentlichen gesättigten Fettsäuren auf Basis Palmkern und 2-Ethylhexanol, das zum weitaus überwiegenden Teil auf C_{12/14}-Fettsäuren zurückgeht.
Handelsprodukt "Pernil RU": Mehrfach olefinisch ungesättigter C₁₈-Fettalkohol (Jodzahl >60).
Handelsprodukt "Lorol C8-10": C₈₋₁₀-Fettalkohol.
Handelsprodukt "BP 83HF": Reines Kohlenwasserstofföl gemäß dem Stand der Technik.

### Beispiel 1

In einer Mehrzahl von Testversuchen werden verschiedene Trägerflüssigkeiten zur Herstellung von Feststoffslurries unter Einsatz zweier unterschiedlicher Typen von Guarmehl durchgeführt. Zum Einsatz kommt dabei in einer ersten Versuchsreihe das unter dem Handelsnamen "KWL 2000" vertriebene Guarmehl, das keine viskositätsstabilisierenden Zusätze enthält. In einer zweiten Versuchsreihe wird ein Viskositätsstabilisator enthaltendes Guarmehl eingesetzt, das unter dem Handelsnamen "J4PL" von der Firma The Western Co., Aberdeen GB, vertrieben wird.

Zur Bestimmung der Stabilität des jeweiligen Gemisches Guarmehl/Trägerflüssigkeit wird in allen Fällen ein Slurry gemäß der nachfolgenden Arbeitsanweisung hergestellt: 100 ml Trägerflüssigkeit und 85 g Guarmehl - Mengenverhältnis von 1 : 1 - werden miteinander vermischt. Dazu wird das Guarmehl unter Rühren in die Trägerflüssigkeit eingegeben, Rührzeit jeweils 25 Minuten (IKA-Rührer mit 500 UpM), anschließend wird der Slurry in einem 250 ml Meßzylinder bei 27°C in einem Wasserbad 24 Stunden temperiert. Nach Ablauf dieser Frist wird die eingetretene Phasentrennung anhand der Graduierung des Meßzylinders abgelesen und entsprechend umgerechnet.

Bei Einsatz unterschiedlicher Trägerflüssigkeiten - einerseits gemäß Stand der Technik mit dem reinen Kohlenwasserstofföl "BP 83HF" und andererseits unter Einsatz erfindungsgemäßer oleophiler Ölphasen - werden die folgenden Ergebnisse erhalten:

| Flüssigphase | % abgetrennte Flüssigphase nach 24 Stunden |
|---|---|
| | |
| BP 83HF | 40 |
| Di-n-Octylether | 25 |
| Rüböl raff. | <5 |
| Petrofree | 5 |
| 2-Ethylhexyloleat | 5 |

Bei gleicher Arbeitsweise aber Einsatz des mit einem Stabilisierungsmittel versetzten Guarmehls (Handelsprodukt "J4PL") werden die nachfolgenden Ergebnisse erhalten:

| Flüssigphase | ml Slurry | % abgetrennte Flüssigphase nach 24 Stunden |
|---|---|---|
| BP 83HF | 154 | 10 |
| Petrofree | 154 | 3 |
| Di-n-Octylether | 154 | 3 |
| Rüböl raff. | 152 | 0 |
| Petrofree/Pernil RU 1:1 | 150 | 1 |
| Guerbet Alkohol C₁₆/Petrofree 1:1 | 150 | 1 |
| 2-Ethylhexyl-Carbonat | 150 | 3 |

| Flüssigphase | ml Slurry | % abgetrennte Flüssigphase nach 24 Stunden |
|---|---|---|
| | | |
| Di-Octyladipat | 148 | 3 |
| Di-Ethylhexylsebacat | 148 | 1 |
| Petrofree/Pernil RU 4:1 | 148 | 1 |
| Petrofree/Rüböl raff. 3:2 | 154 | 3 |
| Petrofree/Di-n-Octylether 4:1 | 154 | 3 |
| 2-Ethylhexyloleat | 156 | 1 |
| Isobutyloleat | 152 | 1 |
| Lorol C₈₋₁₀ + 3 PO | 164 | 4 |
| Lorol C₈₋₁₀ + 1 EO + 2 PO | 154 | 3 |

Die Vergleichsversuche zeigen für alle erfindungsgemäß definierten Systeme die verringerte Entmischbarkeit der Feststoffphase in der Ölphase auch bei ganztägiger Lagerung.

### Beispiel 2

In einer Reihe weiterer Vergleichsversuche unter Standardbedingungen wird das Löseverhalten und die Viskositätsausbildung erfindungsgemäß ausgestalteter Wertstoffmischungen auf Basis Guarmehl bestimmt und mit einem entsprechenden Produkt des Standes der Technik verglichen, in dem das Guarmehl in der reinen Kohlenwasserstoffölphase dispergiert ist.

In allen Fällen wird die an die Zusammensetzung typischer Frac-Fluids angelehnte nachfolgende Testrezeptur eingesetzt:

Testrezeptur:
500 ml Wasser
10 g KCL (Elektrolyt)
1 ml pH-Puffer (NaOH, pH 11-12)
2,4 g Guarpulver, entspricht 5,8 g der jeweiligen Dispersion
0,75 ml Crosslinker auf Borat-Basis

Die rheologische Untersuchung der jeweiligen Testrezeptur wird wie folgt durchgeführt: Bei 120°F (49°C) und permanenter Scherung mit 300 UpM wird die Bestimmung der jeweiligen Scherkraft durch Fann-Messung vorgenommen. Dabei erfolgt diese Messung jeweils in Abständen von 1 Minute für den Zeitraum von insgesamt 10 Minuten. Die in der nachfolgenden Tabelle angegebenen Meßwerte sind die SKT-Werte der Fann-Messung, entsprechend den Zahlenwerten in cP als Meßeinheit.

Die nachfolgende Tabelle faßt die Meßdaten von 4 erfindungsgemäß zusammengesetzten Wertstoffgemischen zusammen und setzt diese Werte in Vergleich zu dem entsprechenden Material des Standes der Technik auf Basis der reinen Kohlenwasserstoffölphase.

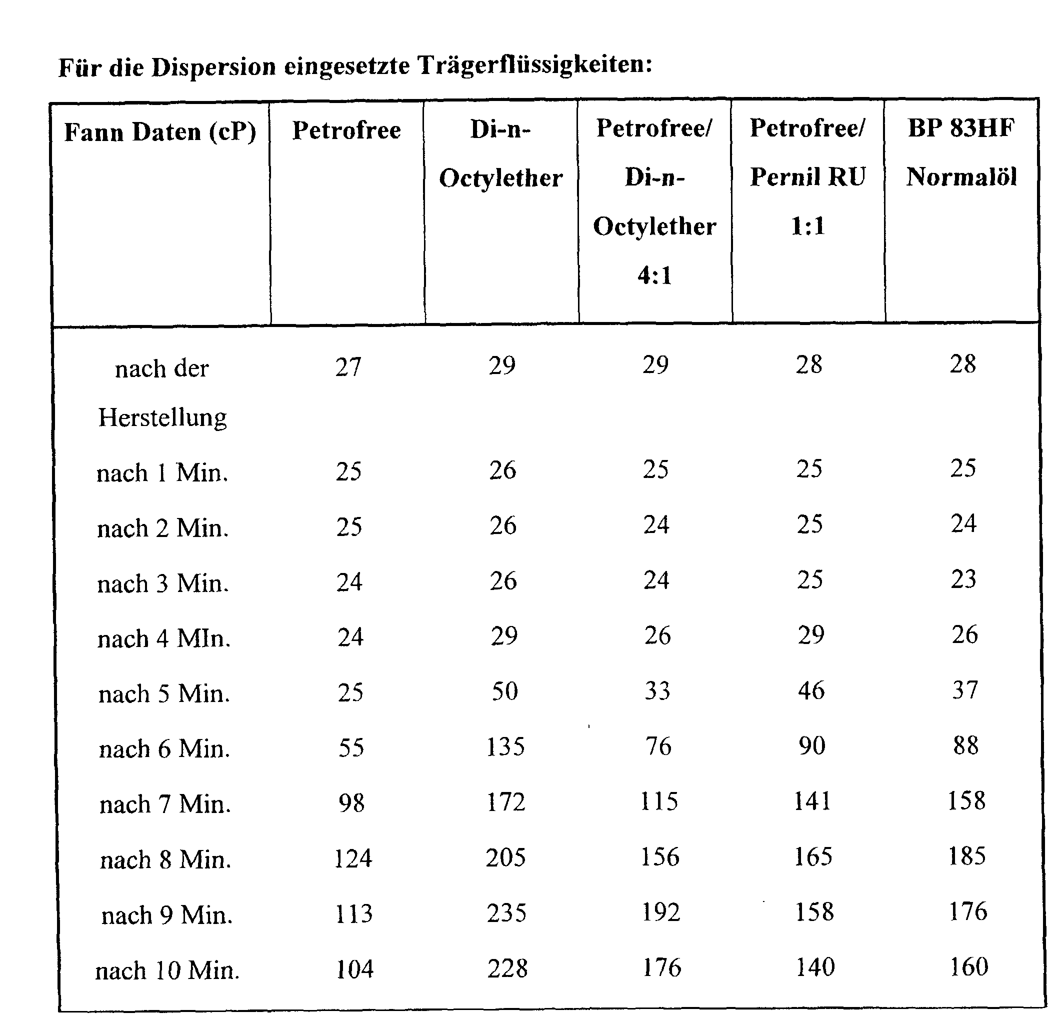

## Patentansprüche

1. Verwendung öllöslicher und im Temperaturbereich von 0 bis 10°C fließfähiger oleophiler organischer Flüssigphasen aus den Klassen von Mono- und/oder Polycarbonsäureester, Kohlensäureester, Ether, Fettalkohole und deren Oligoalkoxide, sowie ihren Abmischungen miteinander, gekennzeichnet durch Flammpunkte von wenigstens 80°C und Viskositätswerte (Brookfield RVT-Viskosität bestimmt bei 10°C) nicht über 150 mPas als alleinige Flüssigphase in lagerstabil homogenen Abmischungen mit Guar und/oder wasserlöslichen Guarderivaten in der Form feinteiliger Feststoffe für deren Einsatz in wasserbasierten Bohrlochbehandlungsmitteln.

2. Verwendung nach Anspruch 1, dadurch gekennzeichnet, daß Abmischungen mit hohen Feststoffkonzentrationen verwendet werden, deren Mischungsverhältnisse von oleophiler Flüssigphase: feinstteiliger Feststoffphase - jeweils Gewichtsanteile - im Bereich von 65 : 35 bis 40 : 60, insbesondere im Bereich von 55 : 45 bis 45 : 55 liegen.

3. Verwendung nach Ansprüchen 1 und 2, dadurch gekennzeichnet, daß oleophile Flüssigphasen mit Flammpunkten von wenigstens 100°C, vorzugsweise von wenigstens 130°C verwendet werden, deren Viskositätswerte bei höchstens 50 mPas und insbesondere unterhalb 30 mPas liegen.

4. Verwendung nach Ansprüchen 1 bis 3, dadurch gekennzeichnet, daß die Guarkonzentrate in wasserbasierten Stimulierungsflüssigkeiten und/oder in wasserbasierten Bohrloch-Reinigungsmitteln zum Einsatz kommen.

5. Verwendung nach Ansprüchen 1 bis 4, dadurch gekennzeichnet, daß als Flüssigphase Ester von Monocarbonsäuren mit wenigstens 8 C-Atomen, vorzugsweise mit wenigstens 10 bis 12 C-Atomen und insbesondere natürlichen Ursprungs, mit 1-wertigen Alkoholen zum Einsatz kommen.

6. Verwendung nach Ansprüchen 1 bis 5, dadurch gekennzeichnet, daß oleophile Öle beziehungsweise Ölmischphasen mit Stockpunkten gleich/kleiner -5°C, eingesetzt werden.

7. Verwendung nach Ansprüchen 1 bis 6, dadurch gekennzeichnet, daß oleophile Öle beziehungsweise Ölmischphasen mit Stockpunkten gleich/kleiner -10°C bis -15°C, eingesetzt werden.

8. Verwendung nach Ansprüchen 1 bis 7, dadurch gekennzeichnet, daß Ester von gesättigten Monocarbonsäuren mit 6 bis 16 C-Atomen und/oder Ester von 1-und/oder mehrfach olefinisch ungesättigten Monocarbonsäuren mit 16 bis 30 C-Atomen als oleophile Flüssigphase verwendet oder mitverwendet werden, wobei entsprechende Ester mit monofunktionellen Alkoholen bevorzugt sind.

9. Verwendung nach Ansprüchen 1 bis 8, dadurch gekennzeichnet, daß Ester von Monocarbonsäuren wenigstens anteilsweise natürlichen Ursprungs in Abmischung mit oleophilen Ethern zum Einsatz kommen, wobei Mischungsverhältnisse mit untergeordneten Anteilen an Ether(n), bevorzugt sind, und dabei wiederum solche Ether besonders bevorzugt sind, die - im Vergleich zu den Monocarbonsäureestern - niedrigere Viskositäten aufweisen.

10. Verwendung nach Ansprüchen 1 bis 9, dadurch gekennzeichnet, daß Ether, Mischether und/oder Ethergemische von monofunktionellen Alkoholen mit bis zu 24 C-Atomen, die auch wenigstens anteilsweise olefinisch ungesättigt sein können, verwendet werden.

11. Verwendung nach Ansprüchen 1 bis 10, dadurch gekennzeichnet, daß Ether von geradkettigen und/oder verzweigten monofunktionellen Alkoholen mit 8 bis 18 C-Atomen mitverwendet werden.

12. Verwendung nach Ansprüchen 1 bis 11, dadurch gekennzeichnet, daß als oleophile Flüssigphase Abmischungen von Carbonsäureestern und Ether verwendet werden, die Carbonsäureester als überwiegenden Bestandteil enthalten, wobei weiterhin Ester/Ether-Abmischungen im Bereich (Gewichtsanteile) 3/1 bis 5/1 besonders bevorzugt sind.

13. Fließ- und pumpfähige Zubereitungen von feinteiligen festen, wasserlöslichen und/oder in Wasser quellenden Viskositätsbildnern auf Basis Guar und/oder Guarderivaten in Abmischungen mit einer im Temperaturbereich von 0 bis 5°C fließfähigen oleophilen Flüssigphase, dadurch gekennzeichnet, daß die oleophile Flüssigphase gemäß Ansprüchen 1 bis 12 ausgebildet ist.

## Claims

1. The use of oil-soluble oleophilic organic liquid phases - flowable at temperatures of 0 to 10°C - from the classes of monocarboxylic and/or polycarboxylic acid esters, carbonic acid esters, ethers, fatty alcohols and their oligoalkoxides and mixtures thereof with one another, characterized by flashpoints of at least 80°C and viscosities (Brookfield RVT viscosities, as measured at 10°C) of not more than 150 mPas as sole liquid phase in storage-stable homogeneous mixtures with guar and/or water-soluble guar derivatives in the form of fine-particle solids for their use in water-based borehole servicing fluids.

2. The use claimed in claim 1, characterized in that high-solids mixtures in which the ratio of oleophilic liquid phase to fine-particle solid phase (in parts by weight) is in the range from 65:35 to 40:60 and more particularly in the range from 55:45 to 45:55 are used.

3. The use claimed in claims 1 and 2, characterized in that oleophilic liquid phases with flashpoints of at least 100°C and preferably of at least 130°C and viscosities of at most 50 mPas and more particularly below 30 mPas are used.

4. The use claimed in claims 1 to 3, characterized in that the guar concentrates are used in water-based stimulation fluids and/or in water-based borehole cleaning fluids.

5. The use claimed in claims 1 to 4, characterized in that esters of monocarboxylic acids containing at least 8 carbon atoms and preferably at least 10 to 12 carbon atoms, more particularly of natural origin, with monohydric alcohols are used as the liquid phase.

6. The use claimed in claims 1 to 5, characterized in that oleophilic oils or mixed oil phases with pour points of -5°C or lower are used.

7. The use claimed in claims 1 to 6, characterized in that oleophilic oils or mixed oil phases with pour points of-10°C to -15°C or lower are used.

8. The use claimed in claims 1 to 7, characterized in that esters of saturated monocarboxylic acids containing 6 to 16 carbon atoms and/or esters of monoolefinically and/or polyolefinically unsaturated monocarboxylic acids containing 16 to 30 carbon atoms are used as the oleophilic liquid phase or as part of the oleophilic liquid phase, corresponding esters with monohydric alcohols being preferred.

9. The use claimed in claims 1 to 8, characterized in that esters of monocarboxylic acids of at least partly natural origin are used in admixture with oleophilic ethers, mixtures containing only small quantities of ether(s) being preferred and ethers with lower viscosities than the monocarboxylic acid esters being particularly preferred.

10. The use claimed in claims 1 to 9, characterized in that ethers, mixed ethers and/or ether mixtures of monohydric alcohols containing up to 24 carbon atoms, which may also be at least partly olefinically unsaturated, are used.

11. The use claimed in claims 1 to 10, characterized in that ethers of linear and/or branched monohydric alcohols containing 8 to 18 carbon atoms are used.

12. The use claimed in claims 1 to 11, characterized in that mixtures of carboxylic acid esters and ethers in which the carboxylic acid esters are predominant are used as the oleophilic liquid phase, mixing ratios of ester to ether (parts by weight) of 3:1 to 5:1 being particularly preferred.

13. Flowable and pumpable preparations of fine-particle solid, water-soluble and/or water-swellable thickeners based on guar and/or guar derivatives in admixture with an oleophilic liquid phase flowable at temperatures of 0 to 5°C, characterized in that the oleophilic liquid phase is made up as claimed in claims 1 to 12.

## Revendications

1. Utilisation de phases liquides organiques oléophiles, solubles dans l'huile et fluides dans une plage de températures allant de 0 à 10°C, choisies dans la classe des esters d'acide mono- et/ou polycarboxylique, des esters d'acide carbonique, des éthers, des alcools gras et de leurs oligoalkoxydes, ainsi que de leurs mélanges les uns avec les autres,
caractérisée en ce que
les phases ont des points d'inflammation d'au moins 80°C et par des valeurs de viscosité (viscosité Brookfield RVT déterminée à 10°C) qui ne dépassent pas 150 mPa.s en tant que phase liquide unique dans des mélanges homogènes stables au stockage avec la gomme guar et/ou dans des dérivés de gomme guar solubles dans l'eau, sous la forme de matières solides finement divisées, pour leur utilisation dans des agents à base d'eau pour traitement de trous de forage.

2. Utilisation selon la revendication 1,
caractérisée en ce qu'
on utilise des mélanges contenant des concentrations élevées en matières solides, dont les rapports de mélange de la phase liquide oléophile/phase solide finement divisée- à chaque fois en proportions en poids- se situent dans la zone de 65:35 à 40:60, en particulier dans la zone de 55:45 à 45:55.

3. Utilisation selon les revendications 1 et 2,
caractérisée en ce qu'
on utilise des phases liquides oléophiles ayant des points d'inflammation dans moins 100°C, de préférence d'au moins 130°C, dont les valeurs de viscosité se situent à au maximum 50 mPa.s et en particulier en dessous de 30 mPa.s.

4. Utilisation selon l'une quelconque des revendications 1 à 3,
caractérisée en ce qu'
on utilise les concentrés de gomme guar dans des fluides de stimulation basés sur l'eau et/ou dans des produits de nettoyage de trous de forage à base d'eau.

5. Utilisation selon l'une quelconque des revendications 1 à 4,
caractérisée en ce qu'
on utilise comme phase liquide, des esters d'acide monocarboxylique ayant au moins 8 atomes de carbone, de préférence ayant au moins de 10 à 12 atomes de carbone, et principalement d'origine naturelle, avec des alcools monofonctionnels.

6. Utilisation selon l'une quelconque des revendications 1 à 5,
caractérisée en ce qu'
on utilise des huiles oléophiles ou des phases mixtes huileuses ayant des points de solidification égaux ou inférieurs à -5°C.

7. Utilisation selon l'une quelconque des revendications 1 à 6,
caractérisée en ce qu'
on utilise des huiles oléophiles ou des phases mixtes huileuses ayant des points de solidification égaux ou inférieurs à -10°C à -15°C.

8. Utilisation selon l'une quelconque des revendications 1 à 7,
caractérisée en ce qu'
on utilise ou co-utilise des esters d'acides monocarboxyliques saturés ayant de 6 à 16 atomes de carbone et/ou des esters d'acide monocarboxylique mono et/ou plusieurs fois non saturés oléfiniquement, ayant de 16 à 30 atomes de carbone comme phase liquide oléophile, les esters correspondants avec des alcools monofonctionnels étant préférés.

9. Utilisation selon l'une quelconque des revendications 1 à 8,
caractérisée en ce qu'
on utilise des esters d'acide monocarboxylique au moins partiellement d'origine naturelle en mélange avec des éthers oléophiles et les rapports de mélange avec des fractions inférieures en éther(s) sont préférées et ainsi à nouveau on préfère particulièrement les éthers qui possèdent, par comparaison aux esters d'acide monocarboxylique, des viscosités plus faibles.

10. Utilisation selon l'une quelconque des revendications 1 à 9,
caractérisée en ce qu'
on utilise des éthers, des éthers mixtes, et/ou des mélanges d'éthers d'alcool monofonctionnels ayant jusqu'à 24 atomes de carbone, qui peuvent être aussi partiellement au moins, non saturés oléfiniquement.

11. Utilisation selon l'une quelconque des revendications 1 à 10,
caractérisée en ce qu'
on utilise conjointement des éthers d'alcools monofonctionnels linéaires et/ou ramifiés ayant de 8 à 18 atomes de carbone.

12. Utilisation selon l'une quelconque des revendications 1 à 11,
caractérisée en ce qu'
on utilise comme phases liquides oléophiles, des mélanges d'esters d'acide carboxylique et d'éther qui renferment l'ester d'acide carboxylique comme constituant prépondérant, en outre les mélanges ester/éther dans la zone (fractions en poids) de 3/1 à 5/1 étant particulièrement préférés.

13. Préparations aptes à l'écoulement et au pompage d'agents générateurs de viscosité solides, finement divisés, solubles dans l'eau et/ou gonflant dans l'eau, à base de gomme guar et/ou de dérivés de gomme guar, en mélanges avec des phases liquides oléophiles, fluides dans la plage de températures de 0 à 5°C,
caractérisées en ce que
la phase liquide oléophile est constituée conformément aux revendications 1 à 12.
